# EUROPÄISCHE PATENTSCHRIFT

(11) **EP 3 077 952 B1**
(45) Veröffentlichungstag und Bekanntmachung des Hinweises auf die Patenterteilung: **03.10.2018**
(21) Anmeldenummer: 14792442.7
(22) Anmeldetag: 24.10.2014
(51) Int. Cl.: G06F 21/62, H04L 29/06, H04L 29/08

(54) **VERFAHREN ZUM ZUGRIFF AUF EINEN DATENSPEICHER EINES CLOUD-COMPUTERSYSTEMS**
METHOD FOR ACCESSING A DATA MEMORY OF A CLOUD COMPUTER SYSTEM
PROCÉDÉ D'ACCÈS À UNE MÉMOIRE DE DONNÉES D'UN SYSTÈME INFORMATIQUE EN NUAGE

(30) Priorität: 05.12.2013 DE 102013225021
(43) Veröffentlichungstag der Anmeldung: 12.10.2016
(73) Patentinhaber: Bundesdruckerei GmbH, 10969 Berlin (DE)
(72) Erfinder: BYSZIO, Frank, 16348 Wandlitz (DE)
(74) Vertreter: Richardt Patentanwälte PartG mbB
(86) Internationale Anmeldenummer: PCT/EP2014/072853
(87) Internationale Veröffentlichungsnummer: WO 2015/082123

(56) Entgegenhaltungen:
- WO-A1-2013/068033
- WO-A1-2013/157957
- US-B1- 8 327 128
- Thomas Kunz ET AL: "OmniCloud - Sichere und flexible Nutzung von Cloud-Speicherdiensten", , 30. November 2012 (2012-11-30), XP055161728, Gefunden im Internet: URL:https://web.archive.org/web/2013062115 5522/http://www.omnicloud.sit.fraunhofer.d e/download/omnicloud-whitepaper-de.pdf [gefunden am 2015-01-13]
- Michael Vrable ET AL: "BlueSky: A Cloud-Backed File System for the Enterprise", , 17. Februar 2012 (2012-02-17), XP055161860, Gefunden im Internet: URL:http://cseweb.ucsd.edu/~voelker/pubs/b luesky-fast12.pdf [gefunden am 2015-01-13]

## Beschreibung

Die Erfindung betrifft ein Verfahren zum Zugriff auf einen Datenspeicher eines Cloud-Computersystems sowie ein Computersystem.

Aus dem Stand der Technik ist es bekannt, Daten verschlüsselt in der sogenannten Cloud zu speichern. Beispielsweise werden bei dropbox.com von dem Nutzer in die Cloud hochgeladene Dateien mit AES-256-Bit-Verschlüsselung gespeichert. Nachteilig ist hierbei, dass der entsprechende Schlüssel Dropbox bekannt ist, sodass die Vertraulichkeit der Daten gegenüber Dropbox nicht gewährleistet ist.

Alternativ kann der Nutzer eine Datei, die er in der Cloud speichern möchte, auf seinem Endgerät zunächst verschlüsseln und dann die verschlüsselte Datei von seinem Endgerät in die Cloud hochladen. In diesem Fall ist die Vertraulichkeit der Datei auch gegenüber dem Cloud-Anbieter, wie zum Beispiel Dropbox, gewährleistet, da der Cloud-Anbieter keinen Zugriff auf den Schlüssel des Nutzers hat, welchen dieser für die Verschlüsselung auf seinem Endgerät verwendet hat. Nachteilig hierbei ist allerdings, dass der Nutzer den Schlüssel bei sich führen muss, um über verschiedene Endgeräte die Datei aus der Cloud wieder herunterzuladen und dann auf dem betreffenden Endgerät zu entschlüsseln. Ein weiterer Nachteil hierbei ist, dass der Nutzer einem anderen Nutzer, dem er eine Leseberechtigung auf die Datei einräumen möchte, seinem geheimen Schlüssel für die Entschlüsselung der Datei mitteilen muss, was ein inhärentes Sicherheitsrisiko bedeutet.

Das Dokument XP055161728 beschreibt den nächstliegenden Stand der Technik. Der Erfindung liegt daher die Aufgabe zugrunde, ein verbessertes Verfahren zum Zugriff auf einen Datenspeicher eines Cloud-Computersystems zu schaffen sowie ein entsprechendes Computersystem.

Unter einem "Cloud-Computersystem" wird hier ein Computersystem mit einem Datenspeicher verstanden, wobei auf das Computersystem über ein Netzwerk, wie zum Beispiel das Internet, zugegriffen werden kann.

Unter einem "Gateway-Computersystem" wird hier ein Computersystem verstanden, welches über ein Netzwerk ein Speicherkommando oder ein Lesekommando an ein Cloud-Computersystem richten kann, um eine Datei in dem Datenspeicher des Cloud-Computersystems zu speichern oder aus dem Datenspeicher zu lesen. Unter einem "Endgerät" wird hier ein Computersystem mit einer Netzwerk-Schnittstelle verstanden, insbesondere ein Personalcomputer, Laptop, Notebook, Tablet oder ein anderer mobiler Computer, ein Telekommunikationsgerät, insbesondere ein Mobilfunkgerät, wie zum Beispiel ein Smartphone oder ein anderes netzwerkfähiges Gerät mit einer Nutzerschnittstelle.

Unter einem "Netzwerk" wird hier ein Kommunikationsnetzwerk, insbesondere ein öffentliches Netzwerk, wie zum Beispiel das Internet, verstanden.

Unter einer "Session" wird hier eine temporäre Kommunikationsverbindung, das heißt eine sog. Communication Session, verstanden, die sich gemäß OSI-Schichtmodell auf die Transportschicht ("transport layer") oder die Anwendungsschicht ("application layer") beziehen kann. Insbesondere kann es sich bei einer Session um eine http-Session oder um eine https-Session handeln, wobei bei letzterer der Transportlayer durch eine symmetrische Verschlüsselung geschützt ist.

Unter einem "Datei-Verzeichnis" wird hier eine Verzeichnisstruktur, Ordnerstruktur oder ein Verzeichnisbaum verstanden, das Dateipfade zu gespeicherten Dateien angibt und eine Auswahl eines Dateipfads für eine zu speichernde Datei ermöglicht.

Unter einem "VPN" wird hier ein Virtual Private Network verstanden, welches zum Beispiel über ein öffentliches Netzwerk, wie zum Beispiel das Internet, aufgebaut werden kann. Typischerweise setzt die Verbindung des Endgeräts mit dem VPN eine Authentifizierung des Nutzers und/oder des Endgeräts gegenüber dem VPN voraus. Insbesondere kann eine Verbindung des Endgeräts zu einem VPN durch ein sogenanntes VPN on demand erfolgen, welches beispielsweise in dem Apple-Betriebssystem iOS unterstützt wird, vgl. "Implementierung von iPhone und iPad, Virtuelle private Netzwerke (VPN)", Apple Inc., 2012, oder durch Starten einer entsprechenden App zum Beispiel auf einem Android-Betriebssystem.

Unter einem "DNS" wird hier ein Domain Name Server verstanden, der in einem TCP/IP-Netzwerk, beispielsweise also dem Internet, die Funktion der Namensauflösung hat, das heißt der Zuordnung einer IP-Adresse zu einer URL, d.h. den sogenannten Forward Lookup.

Unter einem "APN" wird hier ein Access Point Name verstanden, das heißt ein Zugangspunkt eines Mobilfunkgeräts, wie zum Beispiel eines Smartphones, zu einem Mobilfunknetz. Typischerweise ist ein solcher APN in einem Mobilfunkgerät voreingestellt.

Nach einer Ausführungsform der Erfindung wird eine Datei von einem Nutzer wie folgt in dem Cloud-Computersystem gespeichert:
- Zunächst wird eine geschützte Verbindung zwischen einem Endgerät des Nutzers und einem Gateway-Computersystem aufgebaut. Je nach Ausführungsform kann dies nach dem https-Protokoll, über ein VPN oder ein anderes Protokoll erfolgen. Beispielsweise gibt der Nutzer hierzu die URL des Gateway-Computersystems in einen Internetbrowser seines Endgeräts ein, um diese geschützte Verbindung herzustellen.
- Der Nutzer überträgt dann eine Datei von einem Endgerät an das Gateway-Computersystem über die geschützte Verbindung, um diese Datei auf das Cloud-Computersystem hochzuladen.
- Das Gateway-Computersystem baut dann eine Session mit dem Cloud-Computersystem auf.
- Das Gateway-Computersystem authentifiziert den Nutzer gegenüber dem Cloud-Computersystem, indem das Gateway-Computersystem auf in dem Gateway-Computersystem gespeicherte Authentifizierungsdaten des Nutzers zugreift, wie zum Beispiel eine Username/Passwort-Kombination und diese zur Authentifizierung gegenüber dem Cloud-Computersystem verwendet.
- Nach erfolgreicher Authentifizierung verschlüsselt das Gateway-Computersystem die Datei mit einem Schlüssel. Dieser Schlüssel kann nutzerspezifisch sein und wird von dem Gateway-Computersystem gespeichert. Bei dem Schlüssel kann es sich um einen symmetrischen Schlüssel für die Ver- und Entschlüsselung der Datei handeln oder auch um ein kryptografisches asymmetrisches Schlüsselpaar, wobei in diesem Fall der öffentliche Schlüssel für die Verschlüsselung und der private Schlüssel für die Entschlüsselung von dem Gateway-Computersystem verwendet wird. Ferner ist auch eine hybride Verschlüsselung der Datei unter Verwendung von sowohl einen symmetrischen als auch einem asymmetrischen Schlüsselpaar möglich. Für die von dem Endgerät des Nutzers empfangene Datei generiert das Gateway-Computersystem in diesem Fall einen dateispezifischen symmetrischen Schlüssel. Mit diesem dateispezifischen symmetrischen Schlüssel wird die Datei verschlüsselt. Dem Nutzer ist ein asymmetrisches Schlüsselpaar zugeordnet, d.h. ein privater Schlüssel des Nutzers mit dem dazugehörigen öffentlichen Schlüssel des Nutzers. Der dateispezifische symmetrische Schlüssel, mit dem die Datei verschlüsselt ist, wird nun seinerseits mit dem öffentlichen Schlüssel des Nutzers verschlüsselt. Der unverschlüsselte dateispezifische symmetrische Schlüssel kann dann von dem Gateway-Computersystem gelöscht werden und braucht dort nicht permanent gespeichert zu werden.
- Die verschlüsselte Datei wird von dem Gateway-Computersystem über die Session an das Cloud-Computersystem übertragen und dort gespeichert. Im dem o.g. Fall einer hybriden Verschlüsselung wird zusätzlich der mit dem öffentlichen Schlüssel des Nutzers verschlüsselte dateispezifische symmetrische Schlüssel über die Session an das Cloud-Computersystem übertragen und dort gespeichert, wobei hierbei eine Zuordnung zu der verschlüsselten Datei erfolgt, um zu einem späteren Zeitpunkt die verschlüsselte Datei und den dazugehörigen verschlüsselten dateispezifischen Schlüssel lesen zu können.

Ausführungsformen der Erfindung sind besonders vorteilhaft, da einerseits die Datei verschlüsselt in dem Cloud-Computersystem gespeichert ist, ohne dass das Cloud-Computersystem Zugriff auf den Schlüssel des Nutzers zur Entschlüsselung der Datei hat, und andererseits der Nutzer unabhängig von dem jeweils verwendeten Endgerät über das Gateway auf seine in dem Cloud-Computersystem gespeicherten Dateien zugreifen kann, da der oder die hierfür erforderlichen Schlüssel nicht auf dem jeweils verwendeten Endgerät vorhanden sein müssen. Hierdurch wird ein höchstes Maß an Flexibilität, Bequemlichkeit und Sicherheit für die Speicherung von Dateien in der Cloud zur Verfügung gestellt.

Nach einer Ausführungsform der Erfindung hat das Cloud-Computersystem ein Datei-Verzeichnis zur Angabe einer Verzeichnisstruktur für die Dateien, die der Nutzer in dem Datenspeicher des Cloud-Computersystems gespeichert hat. Das Gateway-Computersystem hat eine Replik dieses Datei-Verzeichnisses, die anlässlich der Speicherung einer Datei in dem Cloud-Computersystem aktualisiert wird, um hierdurch eine Replikation zu erreichen. Um eine Navigation des Nutzers in der Verzeichnisstruktur des Cloud-Computersystems zu ermöglichen, um nämlich die Datei gezielt an einer bestimmten Stelle abzuspeichern, kann wie folgt vorgegangen werden:
- Das Gateway-Computersystem erzeugt eine Webseite mit einer Wiedergabe der Replik des Datei-Verzeichnisses.
- Diese Webseite wird über die geschützte Verbindung an das Endgerät übertragen und zum Beispiel mittels des Internetbrowsers des Endgeräts angezeigt.
- Der Nutzer wählt dann einen Dateipfad anhand des Datei-Verzeichnisses aus, um einen Speicherort für die Datei auszuwählen.
- Dieser von dem Nutzer ausgewählte Speicherort, das heißt der ausgewählte Dateipfad, wird dann über die geschützte Verbindung von dem Endgerät an das Gateway-Computersystem übertragen.
- Das Gateway-Computersystem generiert ein entsprechendes Speicherkommando für das Cloud-Computersystem, um über die Session die Speicherung der verschlüsselten Datei an dem von dem Nutzer zuvor ausgewählten Speicherort in dem Datenspeicher des Cloud-Computersystems vorzunehmen.
- Nach erfolgreicher Speicherung der verschlüsselten Datei antwortet das Cloud-Computersystem mit einem Bestätigungssignal, um die erfolgreiche Speicherung zu signalisieren.
- Das Gateway-Computersystem aktualisiert daraufhin die Replik des Datei-Verzeichnisses, sodass ein Icon für die zuvor gespeicherte Datei in der Replik des Datei-Verzeichnisses erscheint.

Nach einer Ausführungsform der Erfindung wird ein sogenanntes File-Sharing ermöglicht, indem der Nutzer einen Identifikator eines weiteren Nutzers in sein Endgerät eingibt und dieser Identifikator über die geschützte Verbindung an das Gateway-Computersystem übertragen wird. Bei diesem Identifikator kann es sich zum Beispiel um eine E-Mail-Adresse des weiteren Nutzers handeln. Für das File-Sharing kann wie folgt vorgegangen werden:
- Der Nutzer spezifiziert ein Zugriffsrecht des weiteren Nutzers auf eine bestimmte Datei oder mehrere Dateien, die für den Nutzer in dem Datenspeicher des Cloud-Computersystems gespeichert sind. Diese Spezifizierung kann mithilfe der Replik des Datei-Verzeichnisses des Gateway-Computersystems erfolgen.
- Das Gateway-Computersystem speichert die Spezifizierung des Zugriffsrechts für den weiteren Nutzer zusammen mit dem Identifikator des weiteren Nutzers. Beispielsweise kann die Spezifizierung des Zugriffsrechts auch einer zeitlichen Beschränkung unterliegen.
- Das Gateway-Computersystem erzeugt eine Nachricht, wie zum Beispiel eine E-Mail, um den weiteren Nutzer von der Einräumung des Zugriffsrechts zu informieren. Beispielsweise beinhaltet die E-Mail eine URL, die der weitere Nutzer nach Empfang der E-Mail auf seinem Endgerät selektieren kann, zum Beispiel durch Anklicken mit der Computermaus oder durch Antippen auf dem berührungssensitiven Bildschirm seines Smartphones, woraufhin der Internetbrowser des Endgeräts gestartet und eine Antwort auf diese E-Mail an das Gateway-Computersystem von dem Nutzer resultiert. Daraufhin wird eine geschützte Verbindung, wie zum Beispiel eine https-Verbindung oder per VPN on Demand zwischen dem Gateway-Computersystem und dem Endgerät des weiteren Nutzers aufgebaut, über welche der weitere Nutzer im Rahmen des ihm eingeräumten Zugriffsrechts auf die in dem Datenspeicher des Cloud-Computersystems gespeicherten Dateien des Nutzers über das Gateway-Computersystem lesend zugreifen kann.

Im Falle der o.g. Ausführungsform mit einer hybriden Verschlüsselung beinhaltet die Spezifizierung des Zugriffsrechts für den weiteren Nutzer, dass zunächst eine Lesezugriff des Gateway-Computersystems auf das Cloud-Computersystem erfolgt, um den der Datei, für welche das Zugriffsrecht eingeräumt werden soll, zugeordneten mit dem öffentlichen Schlüssel des Nutzers verschlüsselten dateispezifischen symmetrischen Schlüssel zu lesen. Dieser verschlüsselte dateispezifische symmetrische Schlüssel wird dann durch das Gateway-Computersystem mit Hilfe des privaten Schlüssels des Nutzers, der das Zugriffsrecht dem weiteren Nutzer einräumen möchte, entschlüsselt. Dieser entschlüsselte dateispezifische symmetrische Schlüssel wird anschließend mit dem öffentlichen Schlüssel des weiteren Nutzers, dem ebenfalls ein asymmetrischen kryptographisches Schlüsselpaar zugeordnet ist, verschlüsselt und das sich aus dieser Verschlüsselung ergebende Chiffrat wird von dem Gateway-Computersystems in dem Cloud-Computersystem gespeichert und zwar so, dass das Chiffrat ebenfalls der Datei zugeordnet ist. Auf diese Art und Weise wird dem weiteren Nutzer ein Lesezugriff auf die Datei ermöglicht.

Nach einer Ausführungsform der Erfindung erfolgt der Aufbau der geschützten Verbindung zum Hochladen der Datei von dem Endgerät automatisch mit dem Gateway-Computersystem und nicht mit dem Cloud-Computersystem, obwohl der Nutzer beispielsweise die URL des Cloud-Computersystems in seinen Internetbrowser eingegeben hat.

Nach einer Ausführungsform der Erfindung ist dies so implementiert, dass der DNS, der in dem Betriebssystem des Endgeräts des Nutzers festgelegt ist, den Namen des Cloud-Computersystems, das heißt dessen URL, nicht in die IP-Adresse des Cloud-Computersystems, sondern in die IP-Adresse des Gateway-Computersystems auflöst. Dementsprechend wird die geschützte Verbindung nicht mit dem Cloud-Computersystem, sondern mit dem Gateway-Computersystem aufgebaut. Dies hat für den Nutzer den Vorteil, dass er wie gewohnt zum Beispiel www.dropbox.com in seinen Internetbrowser eingeben kann, weil er auf diese Art und Weise automatisch mit dem Gateway-Computersystem konnektiert wird, ohne die URL des Gateway-Computersystems kennen oder eingeben zu müssen.

In analoger Art und Weise kann eine APN eines Mobilfunknetzes dafür verwendet werden, die gesicherte Verbindung mit dem Gateway-Computersystem und nicht mit dem Cloud-Computersystem aufzubauen.

Im Weiteren werden Ausführungsformen der Erfindung mit Bezugnahme auf die Zeichnungen näher erläutert.

Es zeigen:
- Figur 1: ein Blockdiagramm einer Ausführungsform eines erfindungsgemäßen Computersystems,
- Figur 2: ein Flussdiagramm einer Ausführungsform eines erfindungsgemäßen Verfahrens,
- Figur 3: ein Flussdiagramm einer weiteren Ausführungsform eines erfindungsgemäßen Verfahrens,
- Figur 4: ein Blockdiagramm einer weiteren Ausführungsform eines erfindungsgemäßen Computersystems.

Elemente der nachfolgenden Ausführungsformen, die einander entsprechen oder gleichen, werden jeweils mit identischen Bezugszeichen gekennzeichnet.

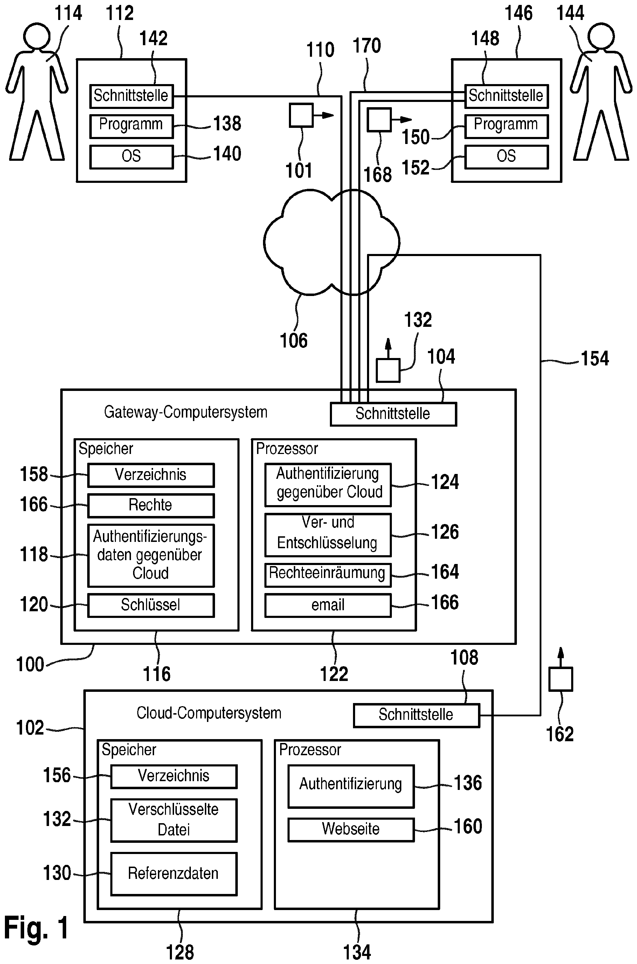

Die Figur 1 zeigt ein Computersystem, das ein Gateway-Computersystem 100 und ein Cloud-Computersystem 102 beinhaltet. Das Gateway-Computersystem 100 hat eine Schnittstelle 104 zur Kopplung mit einem Netzwerk 106, wobei es sich bei dem Netzwerk 106 beispielsweise um das Internet handelt. Das Cloud-Computersystem 102 hat ebenfalls eine Schnittstelle 108 zur Kopplung mit dem Netzwerk 106, sodass eine Session zwischen dem Gateway-Computersystem 100 und dem Cloud-Computersystem 102 aufbaubar ist.

Die Schnittstelle 104 des Gateway-Computersystems 100 kann auch dazu dienen, eine geschützte Verbindung 110 mit einem Endgerät 112 eines Nutzers 114 aufzubauen. Beispielsweise erfolgt der Aufbau der geschützten Verbindung 110 ebenfalls über das Netzwerk 106. Beispielsweise handelt es sich bei der geschützte Verbindung 110 um eine https-Session oder die geschützte Verbindung 110 wird über ein VPN, welches das Endgerät 112 und das Gateway-Computersystem 100 beinhaltet, aufgebaut.

Das Gateway-Computersystem 100 hat einen elektronischen Speicher 116, in den die Authentifizierungsdaten von registrierten Nutzern gespeichert sind, insbesondere die Authentifizierungsdaten 118 des Nutzers 114. Diese Authentifizierungsdaten 118 dienen zur Authentifizierung des Nutzers 114 gegenüber dem Cloud-Computersystem 112. Die Authentifizierungsdaten können zum Beispiel einen Nutzernamen/Passwort-Kombination beinhalten.

Ferner dient der Speicher 116 zur Speicherung von zumindest einem kryptografischen Schlüssel für jeden registrierten Nutzer, insbesondere zur Speicherung des symmetrischen Schlüssels 120 für den Nutzer 114. Anstelle eines symmetrischen Schlüssels kann auch ein asymmetrisches kryptografisches Schlüsselpaar für einen registrierten Nutzer in dem Speicher 116 gespeichert sein.

Das Gateway-Computersystem 100 hat zumindest einen Mikroprozessor 122 zur Ausführung eines Programmmoduls 124, welches zur Authentifizierung eines registrierten Nutzers gegenüber dem Cloud-Computersystem 102 dient sowie zur Ausführung eines Programmmoduls 126 zur Ver- und Entschlüsselung von Dateien mithilfe der in dem Speicher 116 für den jeweiligen Nutzer gespeicherten Schlüssel, insbesondere mithilfe des Schlüssels 120 des Nutzers 114.

Das Cloud-Computersystem 102 hat einen elektronischen Speicher 128, in dem Referenzdaten für die Authentifizierung der registrierten Nutzer gespeichert sind, insbesondere die Referenzdaten 130 für den Nutzer 114. Ferner sind in dem Speicher 128 verschlüsselte Dateien der registrierten Nutzer gespeichert sind, insbesondere die verschlüsselte Datei 132, die dort für den Nutzer 114 abgespeichert ist.

Das Cloud-Computersystem 102 beinhaltet zumindest einen Mikroprozessor 134 zur Ausführung eines Programmmoduls 136 für die Authentifizierung der registrierten Nutzer. Bei dem Cloud-Computersystem 102 kann es sich um ein aus dem Stand der Technik an sich bekanntes Cloud-Computersystem handeln, wie zum Beispiel dropbox.com. Bei einem solchen Cloud-Computersystem 102 wird üblicherweise unmittelbar zwischen dem Endgerät des Nutzers und dem Cloud-Computersystem 102 eine Internetverbindung aufgebaut, über die sich der Nutzer gegenüber dem Cloud-Computersystem authentifiziert, um dann anschließend Dateien in das Cloud-Computersystem hochladen zu können oder zuvor gespeicherte Dateien herunterladen zu können.

Im Gegensatz zu dieser aus dem Stand der Technik an sich bekannten Vorgehensweise wird erfindungsgemäß so vorgegangen, dass sich nicht der registrierte Nutzer selbst, sondern in dessen Vertretung das Gateway-Computersystem 100 für diesen Nutzer gegenüber dem Cloud-Computersystem authentifiziert und zwar mit Hilfe der Authentifizierungsdaten 118. Dies hat insbesondere den Vorteil, dass für die Implementierung der Erfindung auf existente Cloud-Computersysteme zugegriffen werden kann, ohne dass diese zwingend einer Veränderung bedürften.

Bei dem Endgerät 112 des Nutzers 114 kann es sich um ein stationäres oder mobiles Computersystem, insbesondere ein Telekommunikationsgerät, wie zum Beispiel ein Smartphone, handeln. Das Endgerät 112 dient zur Ausführung eines Programmmoduls 138, bei dem es sich zum Beispiel um einen Internetbrowser oder ein Anwendungsprogramm, wie zum Beispiel eine sogenannte App, handeln kann.

Das Endgerät 112 hat ferner ein Betriebssystem, das heißt ein Operating System, 140, wie zum Beispiel Windows, iOS oder Android, sowie eine Schnittstelle 142 zum Aufbau der geschützten Verbindung 110 mit dem Gateway-Computersystem 100. Bei dem Nutzer 114 handelt es sich um einen registrierten Nutzer, der in dem Gateway-Computersystem 100 und in dem Cloud-Computersystem 102 registriert ist.

Bei einem weiteren Nutzer 144 handelt es sich nicht notwendigerweise um einen registrierten Nutzer; der Nutzer 144 hat ein Endgerät 146, bei dem es sich um einen stationären oder mobilen Computer, ein Telekommunikationsgerät, wie zum Beispiel ein Mobilfunkgerät, insbesondere ein Smartphone, handeln kann. Das Endgerät 146 hat eine Schnittstelle 148 zur Verbindung mit dem Netzwerk 106, ein Programmmodul 150 zum Empfang einer Nachricht, wie zum Beispiel einer E-Mail, und ein Betriebssystem 152.

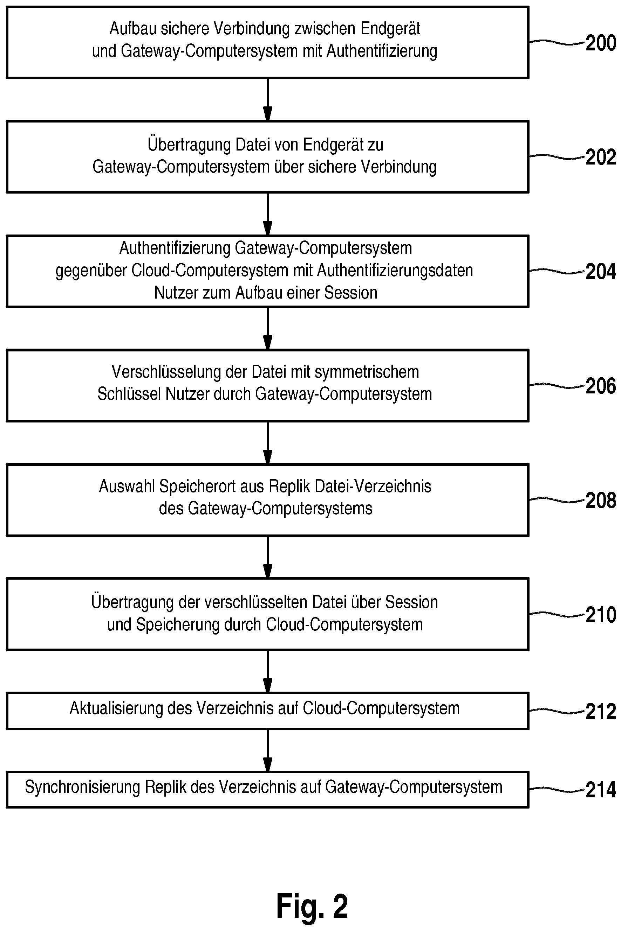

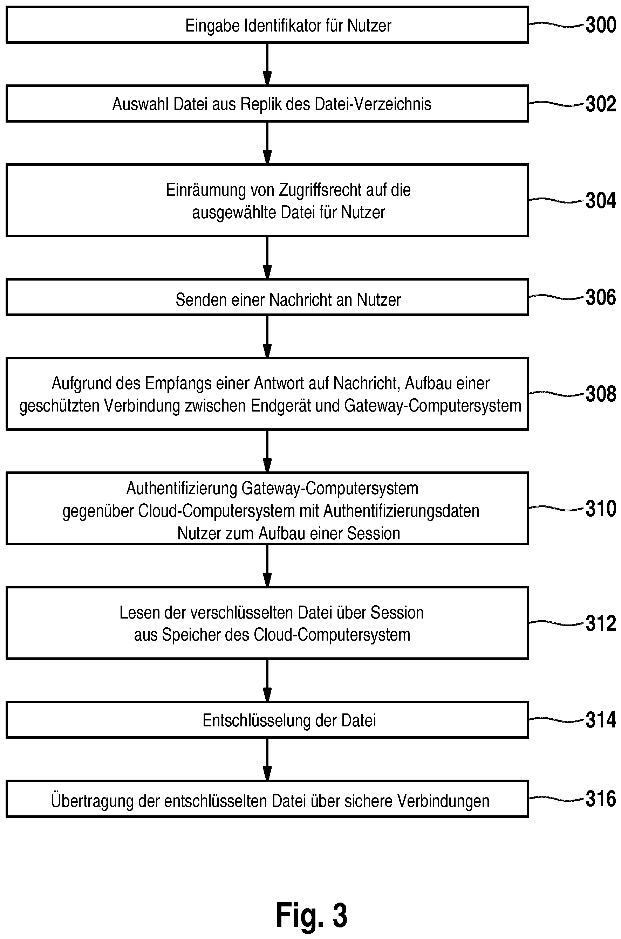

Der Betrieb des Computersystems gemäß Figur 1 wird anhand der Flussdiagramme gemäß Figuren 2 und 3 unten stehend näher erläutert:
In dem Schritt 200 wird die sichere Verbindung 110 zwischen dem Endgerät 112 des Nutzers 114 und dem Gateway-Computersystem 100 aufgebaut. Je nach Ausführungsform kann dies die Authentifizierung des Nutzers 114 und/oder des Endgeräts 112 gegenüber dem Gateway-Computersystem 100 erforderlich machen. Falls die geschützte Verbindung 110 über ein VPN zustande kommt, muss sich der Nutzer 114 beispielsweise zur Einwahl in das VPN mithilfe eines One Time Passwords (OTP) authentifizieren. Eine andere Möglichkeit ist der Aufbau der geschützten Verbindung 110 durch ein sogenanntes VPN on Demand.

Alternativ kann der Aufbau der geschützten Verbindung 110 nach dem https-Protokoll erfolgen, beispielsweise indem der Nutzer 112 ein URL des Gateway-Computersystems 100 zum Aufbau einer solchen https-Verbindung in das Programmmodul 138 eingibt oder indem der Nutzer 114 durch einen sogenannten Redirect auf eine solche URL des Gateway-Computersystems 100 weitergeleitet wird, um die geschützte Verbindung 110 aufzubauen.

In dem Schritt 202 wird eine Datei 101 von dem Endgerät 112 zu dem Gateway-Computersystem 100 über die sichere Verbindung 110 übertragen. Bei der Datei 101 kann es sich zum Beispiel um ein Foto handeln, das der Nutzer 114 mithilfe seines Endgeräts 112 aufgenommen hat, eine Worddatei, eine Exceldatei oder eine andere Datei mit privatem oder geschäftlichem Inhalt des Nutzers 114.

Die Übertragung dieser Datei 101 über die geschützte Verbindung 110 kann unverschlüsselt erfolgen, da aufgrund der geschützten Verbindung 110 für hinreichende Sicherheit gegen Ausspähen oder Manipulation der Datei 101 auf dem Übertragungsweg von dem Endgerät 112 zu dem Gateway-Computersystem 100 gesorgt ist, d.h. die Datei muss vor der Übertragung über die Verbindung 110 nicht zwangsläufig verschlüsselt werden, da die Verbindung 110 selbst z.B. auf dem transport layer verschlüsselt ist. Dies hat den Vorteil, dass auf dem Endgerät 112 keine besondere Verschlüsselungssoftware und kein kryptografischer Schlüssel vorhandeln sein muss, abgesehen von z.B. einen Session Key für die Verbindung 110.

In dem Schritt 204 baut das Gateway-Computersystem 100 aufgrund des Empfangs der Datei 101 von dem Endgerät 112 eine Session 154 mit dem Cloud-Computersystem 102 auf, wie zum Beispiel eine Internet-Session, wenn es sich bei dem Netzwerk 106 um das Internet handelt.

Über diese Session 154 authentifiziert das Gateway-Computersystem 100 den Nutzer 114, indem es auf die Authentifizierungsdaten 118 zugreift. Wenn es sich bei den Authentifizierungsdaten 118 zum Beispiel um eine Nutzername-/Passwort-Kombination handelt, so werden diese Authentifizierungsdaten über die Session 154 an das Cloud-Computersystem 102 übertragen und von dem Cloud-Computersystem 102 auf Übereinstimmung mit den dort gespeicherten Referenzdaten geprüft. Wenn eine solche Übereinstimmung vorliegt, antwortet das Cloud-Computersystem 102 auf die Authentifizierungsdaten 118 mit einem Bestätigungssignal, über die Session 154, um dem Gateway-Computersystem 100 die erfolgreiche Authentifizierung zu signalisieren.

Das Gateway-Computersystem 100 greift in dem Schritt 206 auf den Schlüssel 120 zu, wobei hier ohne Beschränkung der Allgemeinheit davon ausgegangen wird, dass es sich um einen symmetrischen Schlüssel handelt, der dem Nutzer 114 zugeordnet ist. Mit dem Schlüssel 120 verschlüsselt das Gateway-Computersystem 100 die zuvor von dem Endgerät 112 des Nutzers 114 empfangene Datei 101. In dem Schritt 212 wird die resultierende verschlüsselte Datei 132 über die Session 154 von dem Gateway-Computersystem 100 an das Cloud-Computersystem 102 übertragen und von dem Cloud-Computersystem 102 in dem Speicher 128 gespeichert. Daraufhin sendet das Cloud-Computersystem 102 über die Session 154 ein Bestätigungssignal 162, um die erfolgreiche Speicherung zu signalisieren.

Im Falle der oben genannten Ausführungsform mit hybrider Verschlüsselung ist der Schlüssel 120 nicht nutzerspezifisch, sondern dateispezifisch. Aufgrund des Empfangs der Datei 101 erzeugt das Gateway-Computersystem 100 für diese Datei 101 einen dateispezifischen symmetrischen Schlüssel 120. Hierzu hat das Gateway-Computersystem 100 einen entsprechenden Schlüsselgenerator zur Erzeugung des dateispezifischen symmetrischen Schlüssels 120. Mithilfe dieses dateispezifischen symmetrischen Schlüssels 120 verschlüsselt das Gateway-Computersystem 100 die Datei 101.

Für den Nutzer 114 sowie auch für den weiteren Nutzer 144 sind bei der hier betrachteten Ausführungsform mit hybrider Verschlüsselung jeweils asymmetrische kryptografische Schlüsselpaare vorhanden, auf die das Gateway-Computersystem 100 Zugriff hat, wobei die jeweiligen asymmetrischen kryptografischen Schlüsselpaare beispielsweise in dem Speicher 116 gespeichert sind oder auf Chipkarten der Nutzer 114 und 146, wie z.B. auf einer SIM Karte des jeweiligen Endgeräts 112 bzw. 146, oder auf dem jeweiligen elektronischen Personalausweis der Nutzer 114, 146.

Das Gateway-Computersystem 100 verschlüsselt nun den dateispezifischen symmetrischen Schlüssel 120 mithilfe des öffentlichen Schlüssels des Nutzers 114, sodass ein erstes Chiffrat resultiert. Der dateispezifische symmetrische Schlüssel 120 wird anschließend von dem Gateway-Computersystem 100 aus dessen Speicher 116 gelöscht. In dem Schritt 212 werden bei der hier betrachteten Ausführungsform mit hybrider Verschlüsselung die resultierende verschlüsselte Datei 132 und das zugeordnete erste Chiffrat über die Session 154 von dem Gateway-Computersystem 100 an das Cloud-Computersystem 102 übertragen und von dem Cloud-Computersystem 102 in den Speicher 128 gespeichert. Dies hat insbesondere den Vorteil, dass das Gateway-Computersystem nicht permanent eine Kopie des dateispezifischen symmetrischen Schlüssels 120 speichern muss, was einer weiteren Verbesserung des Schutzes der Privatsphäre der Nutzer dienlich ist. Insbesondere kann so vorgegangen werden, dass in dem Speicher 116 des Gateway-Computersystems nur die öffentlichen Schlüssel des Nutzers 114 und des weiteren Nutzers 144 gespeichert werden, nicht aber die entsprechenden privaten Schlüssel, die zum Beispiel auf Chipkarten des Nutzers 114 beziehungsweise des Nutzers 144 gespeichert sind, auf welche die Endgeräte 112 beziehungsweise 146 über entsprechende Schnittstellen zugreifen können.

Das Cloud-Computersystem 102 hat ein Datei-Verzeichnis 154, wie zum Beispiel einen sogenannten File Tree, der verschiedene Dateipfade beinhaltet. In dem Gateway-Computersystem 100 kann eine Replik 158 des Datei-Verzeichnisses 156 gespeichert sein, aus der der Nutzer 114 über die geschützte Verbindung 110 einen Dateipfad für die Speicherung der in dem Schritt 202 übertragenen Datei auswählen kann.

Beispielsweise erfolgt dies so, dass das Cloud-Computersystem 102 nach der Authentifizierung des Nutzers 114 durch das Gateway-Computersystem 100 durch Ausführung eines Programmmoduls 160 durch den Prozessor 134 eine Webseite erzeugt, die zur Wiedergabe des Datei-Verzeichnisses 156 dient. Die entsprechende Information kann als Replik 158 von dem Gateway-Computersystem 100 gespeichert werden. In dem Schritt 208 wählt der Nutzer dann zunächst einen Dateipfad aus dieser Replik 158 des Datei-Verzeichnisses 156 aus, sodass das Gateway-Computersystem dann in dem Schritt 210 ein Speicherkommando zur Speicherung der verschlüsselten Datei 132 an dem durch den Dateipfad spezifizierten Speicherort in dem Speicher 128 erzeugt und über die Session 154 an das Cloud-Computersystem 102 sendet.

In dem Schritt 212 wird das Datei-Verzeichnis 156 durch das Cloud-Computersystem aktualisiert, sodass die verschlüsselte Datei 132 in der aktualisierten Fassung des Datei-Verzeichnisses 156 erscheint. Zur Synchronisierung der Replik 158 mit dem aktualisierten Datei-Verzeichnis 156 kann so vorgegangen werden, dass das Cloud-Computersystem 102 nach der erfolgten Speicherung der verschlüsselten Datei 132 in dem Speicher 128 ein Bestätigungssignal über die Session 154 an das Gateway-Computersystem 100 sendet, um dem Gateway-Computersystem 100 zu signalisieren, dass das Speicherkommando zur Speicherung der verschlüsselten Datei 132 an dem durch den Dateipfad spezifizierten Speicherort erfolgreich durchgeführt worden ist. Dementsprechend kann das Gateway-Computersystem 100 dann die Replik 158 ebenfalls aktualisieren, sodass in der Replik 158 ebenfalls ein Dateipfad mit Angabe des Speicherorts der verschlüsselten Datei 132 erscheint.

Zu einem späteren Zeitpunkt kann der Nutzer 114 wieder auf die verschlüsselte Datei 132 zugreifen. Hierzu wird wiederum die geschützte Verbindung 110 aufgebaut sowie auch die Session 154. Das Gateway-Computersystem 100 authentifiziert den Nutzer 114 dann anhand der Authentifizierungsdaten 118 gegenüber dem Cloud-Computersystem, welches die Authentifizierungsdaten 118 auf Übereinstimmung mit den Referenzdaten 130 prüft. Nach erfolgreicher Authentifizierung des Nutzers 114 gegenüber dem Cloud-Computersystem 102 durch das Gateway-Computersystem 100 kann der Nutzer 114 die verschlüsselte Datei 132 zum Beispiel aus der Replik 158 auswählen, sodass das geschützte Verbindung 110 anschließend ein Lesesignal zum Lesen der verschlüsselten Datei 132 von dem in der Replik 158 angegebenen Speicherort zu erzeugen.

Das Cloud-Computersystem 102 führt dieses Lesekommando durch, indem die verschlüsselte Datei 132 aus dem Speicher 128 ausgelesen und über die Session 154 an das Gateway-Computersystem 100 übertragen wird. Das Gateway-Computersystem 100 greift dann auf den Schlüssel 120 zu, um die verschlüsselte Datei 132 zu entschlüsseln und so die unverschlüsselte Datei 101 zurückzuerhalten. Die unverschlüsselte Datei 101 wird über die Verbindung 110 an das Endgerät 112 des Nutzers 114 übertragen.

Im Falle der Ausführungsform mit hybrider Verschlüsselung wird so vorgegangen, dass sowohl die verschlüsselte Datei 132 als auch das erste Chiffrat aus dem Speicher 128 ausgelesen und über die Session 154 an das Gateway-Computersystem 100 übertragen werden. Das Gateway-Computersystem 100 initiiert dann eine Entschlüsselung des ersten Chiffrats mithilfe des privaten Schlüssels des Nutzers 114.

Wenn der private Schlüssel des Nutzers 114 in dem Speicher 116 des Gateway-Computersystems 100 vorhanden ist, so kann diese Entschlüsselung durch das Gateway-Computersystem 100 selbst erfolgen. Andernfalls sendet das Gateway-Computersystem 100 zum Beispiel über die Verbindung 110 ein Kommando an das Endgerät 112 des Nutzers 114 zur Entschlüsselung des ersten Chiffrats, sodass das Endgerät 112 zum Beispiel ein Chipkartenkommando an eine Chipkarte des Nutzers 114 richtet, auf welche das Endgerät 112 über eine entsprechende Kommunikationsschnittstelle Zugriff hat, sodass die Chipkarte des Nutzers 114 das erste Chiffrat entschlüsselt und den so zurückgewonnenen dateispezifischen symmetrischen Schlüssel 120 über die Verbindung 110 an das Gateway-Computersystem 100 übermittelt wird, welches dann die Entschlüsselung der verschlüsselten Datei 132 mithilfe des so zurückgewonnenen dateispezifischen symmetrischen Schlüssels 120 durchführt.

Für das sogenannte File Sharing mit dem weiteren Nutzer 144 kann der Nutzer 114 wie folgt vorgehen:
Über die Verbindung 110 kann der Nutzer 114 einen Identifikator des Nutzers 144 eingeben, wie zum Beispiel dessen E-Mail-Adresse - Schritt 300. Hierzu hat das Gateway-Computersystem 100 ein Programmmodul 164. Der Nutzer 114 kann für den durch die Identifikator bestimmten Nutzer 144 eine Datei, wie z.B. die Datei 101, auswählen (Schritt 302) und zum Beispiel ein Leserecht auf diese ausgewählte Datei 101, der die verschlüsselte Datei 132 entspricht, spezifizieren oder auch für mehrerer solcher Dateien (Schritt 304). Dieses Leserecht wird als eine Information 166 in den Speicher 116 abgelegt, womit spezifiziert ist, dass der Nutzer 114 über den durch den Identifikator festgelegten Nutzer 144 ein Leserecht zum Beispiel auf die Datei 101 eingeräumt hat.

Durch das Programmmodul 166 erzeugt das Gateway-Computersystem 100 dann eine Nachricht, wie zum Beispiel eine E-Mail 168, die von dem Endgerät 146 des Nutzers 144 empfangen wird - Schritt 306. Die E-Mail 168 beinhaltet beispielsweise einen Link zum Aufbau einer geschützten Verbindung, wie zum Beispiel einer https-Verbindung 170.

Durch Selektierung dieses Links, zum Beispiel durch Anklicken mit der Computermaus, durch den Nutzer 144, wird diese Verbindung 170 aufgebaut (Schritt 308) und das Gateway-Computersystem 100 baut dann wiederum die Session 154 auf, um den Nutzer 114 mithilfe der Authentifizierungsdaten 118 gegenüber dem Cloud-Computersystem 102 zu authentifizieren - Schritt 310.
Von besonderem Vorteil ist dabei, dass für den Nutzer 144 keine Authentifizierung und auch keine Registrierung erforderlich sind. Auf der anderen Seite hat der Nutzer 144 weder auf die Authentifizierungsdaten 118 noch auf den Schlüssel 120 Zugriff.

In dem Schritt 312 sendet das Gateway-Computersystem ein Lesekommando zum Lesen der verschlüsselten Datei 132 an das Cloud-Computersystem 102. Die Spezifizierung dieser zu lesenden Datei 132 kann in den Link, den der Nutzer mit der E-Mail 158 erhalten hat, beinhaltet sein.

In dem Schritt 314 empfängt das Gateway-Computersystem 100 die verschlüsselte Datei 132 und entschlüsselt diese dann mit dem Schlüssel 120. Anschließend wird in dem Schritt 316 die entschlüsselte Datei 132, das heißt die Datei 101, über die Verbindung 170 an das Endgerät 146 übertragen.
Im Fall einer hybriden Verschlüsselung wird für die Einräumung eines Leserechts, zum Beispiel auf die Dateien 101, für den weiteren Nutzer 144, so vorgegangen, dass das Gateway-Computersystem 100 zunächst das erste Chiffrat von dem Cloud-Computersystem 102 liest und das erste Chiffrat mithilfe des privaten Schlüssels des Nutzers 114 entschlüsselt wird. Der so von dem Gateway-Computersystem 100 zurückgewonnene dateispezifische symmetrische Schlüssel 120 wird sodann mithilfe des öffentlichen Schlüssels des weiteren Nutzers 144 verschlüsselt, um so ein zweites Chiffrat zu erhalten. Dieses zweite Chiffrat wird von dem Gateway-Computersystem 100 in dem Cloud-Computersystem 102 so abgespeichert, dass es der verschlüsselten Datei 132 zugeordnet ist. Die temporär von dem Gateway-Computersystem 100 zurückgewonnene Kopie des dateispezifischen symmetrischen Schlüssels 120 wird sodann wieder aus dem Speicher 116 gelöscht.

Bei einem Lesezugriff des weiteren Nutzers empfängt das Gateway-Computersystem 100 dann nicht nur die verschlüsselte Datei 132 in dem Schritt 314, sondern auch das der verschlüsselte Datei 132 zugeordnete zweite Chiffrat. Das zweite Chiffrat wird dann mithilfe des privaten Schlüssels des weiteren Nutzers 144 entschlüsselt, sodass das Gateway-Computersystem 100 wiederum eine temporäre Kopie des dateispezifischen symmetrischen Schlüssels 120 zurückgewinnt, mithilfe dessen das Gateway-Computersystem 100 dann die verschlüsselte Datei 132 entschlüsselt. Die Entschlüsselung des zweiten Chiffrats kann - je nach Ausführungsform - entweder wiederum unmittelbar durch das Gateway-Computersystem 100 erfolgen, was voraussetzt, dass in dem Speicher 116 der private Schlüssel des weiteren Nutzers 144 vorhanden ist, oder indem das zweite Chiffrat zum Beispiel über die Verbindung 170 von dem Gateway-Computersystem 100 an das Endgerät 146 zur Entschlüsselung übermittelt wird. In letzterem Fall antwortet das Endgerät 146 mit dem entschlüsselten zweiten Chiffrat, das heißt dem dateispezifischen symmetrischen Schlüssel 120, der nach der Entschlüsselung der Datei 132 von dem Gateway-Computersystem 100 wiederum aus dessen Speicher 116 gelöscht wird.

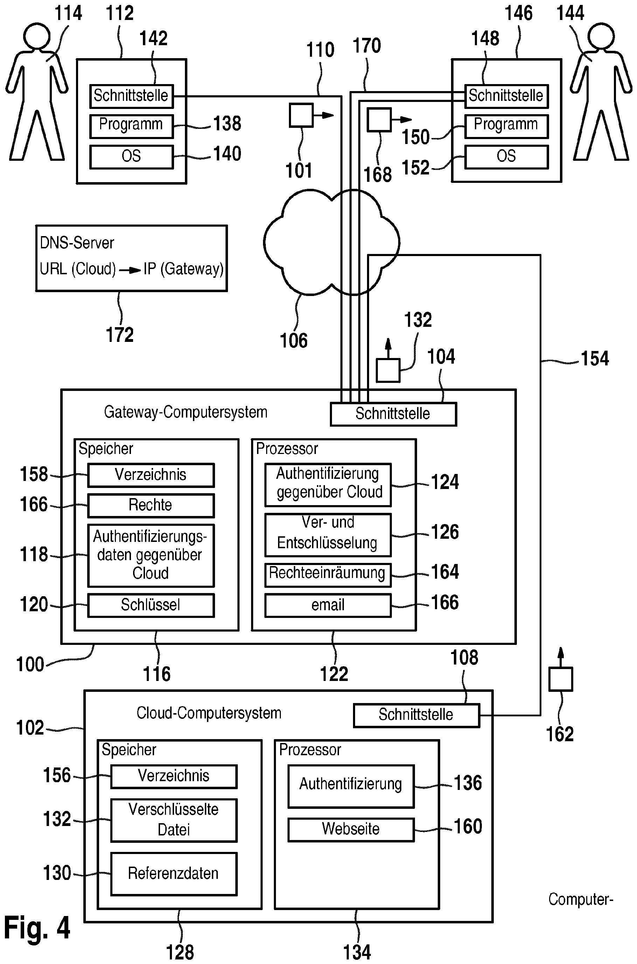

Die Figur 4 zeigt eine Ausführungsform des Computersystems, wobei die Kommunikation zwischen den Systemkomponenten, das heißt dem Gateway-Computersystem 100, dem Cloud-Computersystem 102 sowie den Endgeräten 112 und 146 über das Netzwerk 106 nach dem TCP/IP-Protokoll erfolgt und sogenannte DNS-Server für die sogenannte Namensauflösung verwendet werden.

Durch einen DNS-Server erfolgt, wie im Stand der Technik an sich bekannt, die Zuordnung eines Domain-Namens, das heißt einer URL, zu einer entsprechenden IP-Adresse, die zum Aufbau einer Verbindung mit dem durch die URL spezifizierten Teilnehmer gemäß dem TCP/IP-Protokoll erforderlich ist.

Nach Ausführungsformen der Erfindung ist in dem Betriebssystem 140 einer dieser DNS-Server, nämlich der DNS-Server 172, angegeben. Durch den DNS-Server 172 wird die URL des Cloud-Computersystems 102 nicht der IP-Adresse des Cloud-Computersystems 102, sondern der IP-Adresse des Gateway-Computersystems 100 zugeordnet. Erfolgt also der Aufbau der geschützten Verbindung 110 anhand der URL des Cloud-Computersystems 102, so wird von dem Endgerät 112 über das Netzwerk 106 eine Anforderung für eine Namensauflösung der URL des Cloud-Computersystems 102 den in dem Betriebssystem 140 spezifizierten DNS-Server 172 gerichtet, der dann nicht mit der IP-Adresse des Cloud-Computersystems 102, sondern mit der IP-Adresse des Gateway-Computersystems 100 antwortet, sodass dementsprechend die Verbindung 110 tatsächlich mit dem Gateway-Computersystem 100 und nicht mit dem Cloud-Computersystem 102 aufgebaut wird. Dies hat den Vorteil, dass der Nutzer 114 nicht die URL des Gateway-Computersystems 100 kennen muss, sondern lediglich - wie gewohnt - mit der URL des Cloud-Computersystems 102 arbeiten kann. Beispielsweise kann der Nutzer 114 die URL von dropbox.com in das Programmmodul 138, beispielsweise den Internetbrowser seines Endgeräts 112, eingeben, woraufhin dann die Verbindung 110 mit dem Gateway-Computersystem 100 automatisch aufgebaut wird.

In analoger Art und Weise kann vorgegangen werden, wenn die Verbindung 110 als Mobilfunkverbindung aufgebaut wird. In diesem Fall kann ein APN des Mobilfunknetzwerks die Funktion des DNS-Servers 172 erfüllen.

### Bezugszeichenliste

- 100: Gateway-Computersystem
- 101: Datei
- 102: Cloud-Computersystem
- 104: Schnittstelle
- 106: Netzwerk
- 108: Schnittstelle
- 110: geschützte Verbindung
- 112: Endgerät
- 114: Nutzer
- 116: Speicher
- 118: Authentifizierungsdaten
- 120: Schlüssel
- 122: Mikroprozessor
- 124: Programmmodul
- 126: Programmmodul
- 128: Speicher
- 130: Referenzdaten
- 132: Datei
- 134: Mikroprozessor
- 136: Programmmodul
- 138: Programmmodul
- 140: Betriebssystem
- 142: Schnittstelle
- 144: Nutzer
- 146: Endgerät
- 148: Schnittstelle
- 150: Programmmodul
- 152: Betriebssystem
- 154: Session
- 156: Datei-Verzeichnis
- 158: Replik
- 160: Programm
- 162: Bestätigungssignal
- 164: Programmmodul
- 166: Programmmodul
- 168: E-Mail
- 170: Verbindung
- 172: DNS-Server

## Patentansprüche

1. Verfahren zum Zugriff auf einen Datenspeicher (128) eines Cloud-Computersystems (102) über ein Gateway-Computersystem (100), wobei dem Gateway-Computersystem eine IP-Adresse zugeordnet ist und wobei das Gateway-Computersystem über ein Netzwerk (106) mit dem Cloud-Computersystem verbunden ist, wobei dem Cloud-Computersystem eine URL zugeordnet ist, wobei das Gateway-Computersystem Authentifizierungsdaten (118) eines Nutzers (114) zur Authentifizierung gegenüber dem Cloud-Computersystem speichert sowie zumindest einen kryptografischen Schlüssel (120), wobei in einem Betriebssystem eines Endgeräts des Nutzers ein DNS (172) festgelegt ist, mit folgenden Schritten:
- Übertragung einer Anfrage von dem Endgerät an den in dem Betriebssystem festgelegten DNS über das Netzwerk zum Abrufen einer IP-Adresse des Cloud-Computersystems, welche der URL des Cloud-Computersystems zugeordnet ist,
- Antwort des DNS auf die Anforderung durch Übertragung der IP-Adresse des Gateway-Computersystems an das Endgerät, wobei in dem DNS eine Zuordnung der URL des Cloud-Computersystems zu der IP-Adresse des Gateway-Computersystems gespeichert ist,
- Aufbau einer geschützten Verbindung (110) zwischen einem ersten Endgerät (112) des Nutzers und dem Gateway-Computersystem, wobei der Aufbau der geschützten Verbindung gemäß dem TCP/IP-Protokoll mit der IP-Adresse des Gateway-Computersystems erfolgt,
- Übertragung einer Datei (101) von dem Endgerät an das Gateway-Computersystem über die geschützte Verbindung,
- Aufbau einer Session (154) zwischen dem Gateway-Computersystem und dem Cloud-Computersystem über das Netzwerk,
- Authentifizierung des Nutzers gegenüber dem Cloud-Computersystem durch das Gateway-Computersystem über die Session, indem das Gateway-Computersystem für die Authentifizierung des Nutzers auf die in dem Gateway-Computersystem gespeicherten Authentifizierungsdaten des Nutzers zugreift,
- Verschlüsselung der Datei mithilfe des kryptografischen Schlüssels durch das Gateway-Computersystem,
- Übertragung der verschlüsselten Datei (132) von dem Gateway-Computersystem an das Cloud-Computersystem über die Session,
- Speicherung der verschlüsselten Datei in dem Datenspeicher des Cloud-Computersystems.

2. Verfahren nach Anspruch 1, wobei das Cloud-Computersystem ein Datei-Verzeichnis (156) für in dem Datenspeicher des Cloud-Computersystems gespeicherte Dateien aufweist und in dem Gateway-Computersystem eine Replik (158) des Datei-Verzeichnisses gespeichert ist, mit folgenden weiteren Schritten:
- Erzeugung einer Webseite zur Wiedergabe der Replik des Datei-Verzeichnisses durch das Gateway-Computersystem,
- Übertragung der Webseite an das Endgerät über die geschützte Verbindung,
- Anzeige der Webseite durch das Endgerät und Eingabe einer Auswahl für einen Dateipfad in der angezeigten Replik des Datei-Verzeichnisses für die Speicherung der Datei,
- Übertragung der Auswahl des Dateipfads von dem Endgerät an das Gateway-Computersystem über die geschützte Verbindung,
- Übertragung eines Speicherkommandos von dem Gateway-Computersystem an das Cloud-Computersystem zur Speicherung der verschlüsselten Datei in dem Datenspeicher gemäß dem ausgewählten Dateipfad,
- Empfang eines Bestätigungssignals (162) des Cloud-Computersystems durch das Gateway-Computersystem, wobei das Bestätigungssignal die erfolgreiche Ausführung des Speicherkommandos signalisiert,
- Aktualisierung der Replik des Datei-Verzeichnisses nach dem Empfang des Bestätigungssignals aufgrund der Speicherung der verschlüsselten Datei in dem Datenspeicher des Cloud-Computersystems.

3. Verfahren nach Anspruch 1 oder 2, mit folgenden weiteren Schritten:
- Eingabe eines Identifikators eines weiteren Nutzers (146) in das Endgerät durch den Nutzer,
- Übertragung des Identifikators über die geschützte Verbindung von dem Endgerät an das Gateway-Computersystem,
- Spezifizierung eines Zugriffrechts zum Zugriff auf die in dem Datenspeicher des Cloud-Computersystems gespeicherte Datei für den weiteren Nutzer durch den Nutzer über die geschützte Verbindung,
- Speicherung der Spezifizierung des Zugriffsrechts und des zugeordneten Identifikators des Nutzers durch das Gateway-Computersystem,
- Erzeugung einer Nachricht für den weiteren Nutzer durch das Gateway-Computersystem,
- Übertragung der Nachricht von dem Gateway-Computersystem an ein Endgerät des weiteren Nutzers mithilfe des Identifikators,
- aufgrund des Empfangs einer Antwort auf die Nachricht durch das Gateway-Computersystem:
a) Aufbau einer geschützten Verbindung zwischen dem Gateway-Computersystem und dem Endgerät des weiteren Nutzers,
b) Aufbau einer Session für den weiteren Nutzer zwischen dem Gateway-Computersystem und dem Cloud-Computersystem über das Netzwerk,
c) Authentifizierung des Nutzers gegenüber dem Cloud-Computersystem durch das Gateway-Computersystem über die Session, indem das Gateway-Computersystem für die Authentifizierung des Nutzers auf die in dem Gateway-Computersystem gespeicherten Authentifizierungsdaten des Nutzers zugreift,
d) Übertragung der verschlüsselten Datei von dem Cloud-Computersystem an das Gateway-Computersystem über die Session,
e) Entschlüsselung der Datei mithilfe des kryptografischen Schlüssels des Nutzers durch das Gateway-Computersystem,
f) Übertragung der entschlüsselten Datei von dem Gateway-Computersystem an das Endgerät des weiteren Nutzers über die in Schritt a) aufgebaute geschützte Verbindung.

4. Verfahren nach Anspruch 3, wobei der Nutzer einen Dateipfad zur Auswahl der Datei in das Endgerät eingibt, diese Auswahl über die geschützte Verbindung an das Gateway-Computersystem übertragen wird, und sich die Spezifizierung des Zugriffsrechts auf die so ausgewählte Datei bezieht.

5. Verfahren nach einem der vorhergehenden Ansprüche, wobei es sich bei der geschützten Verbindung um ein Virtual Private Network handelt, welches über das Netzwerk aufgebaut wird.

6. Verfahren nach einem der vorhergehenden Ansprüche, wobei der kryptographische Schlüssel (120), mit dem die Datei verschlüsselt wird, dem Nutzer zugeordnet ist.

7. Verfahren nach einem der vorhergehenden Ansprüche 3, 4 oder 5, wobei der kryptographische Schlüssel (120), mit dem die Datei verschlüsselt wird, ein dateispezifischer symmetrischer Schlüssel ist, wobei dem Nutzer (114) und dem weiteren Nutzer (146) jeweils ein asymmetrisches kryptographsiches Schlüsselpaar mit einem öffentlichen und einem privaten Schlüssel zugeordnet sind, und der dateispezifische symmetrische Schlüssel von dem Gateway-Computersystem mit Hilfe des öffentlichen Schlüssels des Nutzer verschlüsselt wird, um das sich daraus ergebende erste Chiffrat über die erste Session an das Cloud-Computersystem zu übertragen, so dass das erste Chiffrat der verschlüsselten Datei zugeordnet ist und das erste Chiffrat in dem Datenspeicher des Cloud-Computersystems gespeichert wird, wobei der dateispezifische symmetrische Schlüssel nach der Verschlüsselung der Datei von dem Gateway-Computersystem gelöscht wird, wobei die Spezifizierung des Zugriffsrechts zum Zugriff auf die in dem Datenspeicher Cloud-Computersystems gespeicherte Datei für den weiteren Nutzer folgende Schritte beinhaltet:
- Lesen des ersten Chiffrats durch das Gateway-Computersystem von dem Cloud-Computersystem,
- Entschlüsselung des ersten Chiffrats mithilfe des privaten Schlüssels des Nutzers, der das Zugriffsrecht dem weiteren Nutzer einräumen möchte, um so den dateispezifischen symmetrischen Schlüssel zu erhalten, mit dem die Datei verschlüsselt worden ist,
- Verschlüsselung des dateispezifischen symmetrischen Schlüssels mithilfe des öffentlichen Schlüssels des weiteren Nutzers durch das Gateway-Computersystem, woraus sich ein zweites Chiffrat ergibt,
- Übertragung des zweiten Chiffrats von dem Gateway-Computersystem an das Cloud-Computersystem, sodass das zweite Chiffrat der verschlüsselten Datei zugeordnet ist und das zweite Chiffrat in dem Datenspeicher des Cloud-Computersystems gespeichert wird.

8. Verfahren nach einem der vorhergehenden Ansprüche, wobei die sichere Verbindung über eine Mobilfunkverbindung durch einen APN aufgebaut wird, wobei der APN die sichere Verbindung aufgrund der Eingabe der URL des Cloud-Computersystems mit dem Gateway-Computersystem aufbaut.

9. Computersystem mit einem Gateway-Computersystem (100) und einem Cloud-Computersystem (102), wobei dem Cloud-Computersystem eine URL zugeordnet ist, wobei dem Gateway-Computersystem eine IP-Adresse zugeordnet ist und wobei das Gateway-Computersystem über ein Netzwerk (106) mit dem Cloud-Computersystem verbunden ist, wobei das Gateway-Computersystem Authentifizierungsdaten registrierter Nutzer (114) zur Authentifizierung gegenüber dem Cloud-Computersystem speichert sowie zumindest je einen kryptografischen Schlüssel (120) für jeden der registrierten Nutzer, wobei in einem Betriebssystem eines Endgeräts des Nutzers ein DNS (172) festgelegt ist, wobei das Gateway-Computersystem und das Cloud-Computersystem zur Durchführung der folgenden Schritte ausgebildet sind:
- Übertragung einer Anfrage von dem Endgerät an den in dem Betriebssystem festgelegten DNS über das Netzwerk zum Abrufen einer IP-Adresse des Cloud-Computersystems, welche der URL des Cloud-Computersystems zugeordnet ist,
- Antwort des DNS auf die Anforderung durch Übertragung der IP-Adresse des Gateway-Computersystems an das Endgerät,
- wobei in dem DNS eine Zuordnung der URL des Cloud-Computersystems zu der IP-Adresse des Gateway-Computersystems gespeichert ist,
- Aufbau einer geschützten Verbindung zwischen einem ersten Endgerät (112) von einem der Nutzer und dem Gateway-Computersystem, wobei der Aufbau der geschützten Verbindung gemäß dem TCP/IP-Protokoll mit der IP-Adresse des Gateway-Computersystems erfolgt,
- Übertragung einer Datei von dem Endgerät an das Gateway-Computersystem über die geschützte Verbindung,
- Aufbau einer Session zwischen dem Gateway-Computersystem und dem Cloud-Computersystem über das Netzwerk,
- Authentifizierung des Nutzers gegenüber dem Cloud-Computersystem durch das Gateway-Computersystem über die Session, indem das Gateway-Computersystem für die Authentifizierung des Nutzers auf die in dem Gateway-Computersystem gespeicherten Authentifizierungsdaten des Nutzers zugreift,
- Verschlüsselung der Datei mithilfe eines kryptografischen Schlüssels durch das Gateway-Computersystem,
- Übertragung der verschlüsselten Datei von dem Gateway-Computersystem an das Cloud-Computersystem über die Session,
- Speicherung der verschlüsselten Datei in dem Datenspeicher des Cloud-Computersystems.

## Claims

1. A method for accessing a data store (128) of a cloud computer system (102) via a gateway computer system (100), wherein the gateway computer system is assigned an IP address, and wherein the gateway computer system is connected via a network (106) to the cloud computer system, wherein the cloud computer system is assigned a URL, wherein the gateway computer system stores authentication data (118) of a user (114) for authentication to the cloud computer system and at least one cryptographic key (120), wherein in an operating system of a terminal device of the user a DNS (172) is defined, said method having the following steps:
- transferring a request from the terminal device to the DNS defined in the operating system via the network in order to call up an IP address of the cloud computer system which is assigned to the URL of the cloud computer system,
- answering the request by the DNS by transferring the IP address of the gateway computer system to the terminal device, wherein an assignment of the URL of the cloud computer system to the IP address of the gateway computer system is stored in the DNS,
- setting up a protected connection (110) between a first terminal device (112) of the user and the gateway computer system, wherein the protected connection is set up in accordance with the TCP/IP protocol with the IP address of the gateway computer system,
- transferring a file (101) from the terminal device to the gateway computer system over the protected connection,
- setting up a session (154) between the gateway computer system and the cloud computer system over the network,
- authenticating the user to the cloud computer system by the gateway computer system through the session in that the gateway computer system accesses the authentication data of the user stored in the gateway computer system for the authentication of the user.
- encrypting the file by the gateway computer system using the cryptographic key,
- transferring the encrypted file (132) from the gateway computer system to the cloud computer system through the session,
- storing the encrypted file in the data store of the cloud computer system.

2. The method according to claim 1, wherein the cloud computer system has a file directory (156) for files stored in the data store of the cloud computer system and a replica (158) of the file directory is stored in the gateway computer system, with the following further steps:
- producing, by the gateway computer system, a web page displaying the replica of the file directory,
- transferring the web page to the terminal device over the protected connection,
- displaying the web page by the terminal device and inputting a selection for a file path in the displayed replica of the file directory for storage of the file,
- transferring the selection of the file path over the protected connection from the terminal device to the gateway computer system,
- transferring a storage command from the gateway computer system to the cloud computer system to store the encrypted file in the data store in accordance with the selected file path,
- receiving a confirmation signal (162) of the cloud computer system by the gateway computer system, the confirmation signal signalling successful execution of the storage command,
- updating the replica of the file directory after receipt of the confirmation signal on account of the storage of the encrypted file in the data store of the cloud computer system.

3. The method according to claim 1 or 2, comprising the following further steps:
- inputting, by the user, an identifier of another user (146) in the terminal device,
- transferring the identifier from the terminal device to the gateway computer system over the protected connection,
- specifying, by the user, access rights for the other user to access the file stored in the data store of the cloud computer system over the protected connection,
- storing, by the gateway computer system, the specification of the access rights and the associated identifier of the user,
- producing a message for the other user by the gateway computer system,
- transferring the message from gateway computer system to a terminal device of the other user using the identifier,
- on account of the receipt of a response to the message by the gateway computer system:
a) setting up a protected connection between the gateway computer system and the terminal device of the other user,
b) setting up a session for the other user over the network, between the gateway computer system and the cloud computer system,
c) authenticating the user with respect to the cloud computer system by the gateway computer system accessing, through the session, the authentication data of the user stored in the gateway computer system for authentication of the user;
d) transferring the encrypted file from the cloud computer system to the gateway computer system through the session;
e) decrypting the file by the gateway computer system using the cryptographic key of the user;
f) transferring the decrypted file from the gateway computer system to the terminal device of the other user over the protected connection set up in step a).

4. The method according to claim 3, wherein the user inputs a file path to select the file in the terminal device, this selection being transferred over the protected connection to the gateway computer system, and the specification of the access rights relating to the file selected in this way.

5. The method according to any one of the preceding claims, wherein the protected connection is a Virtual Private Network that is set up over the network.

6. The method according to any one of the preceding claims, wherein the cryptographic key (120) with which the file is encrypted is associated with the user.

7. The method according to any one of preceding claims 3, 4 or 5, wherein the cryptographic key (120) with which the file is encrypted is a file-specific symmetric key, wherein the user (114) and the other user (146) are each assigned an asymmetric cryptographic key pair comprising a public and a private key, and the file-specific symmetric key is encrypted by the gateway computer system using the public key of the user, in order to transfer the resulting first cipher through the first session to the cloud computer system, so that the first cipher is associated with the encrypted file and the first cipher is stored in the data store of the cloud computer system, wherein the file-specific symmetric key is deleted from the gateway computer system after the encryption of the file, wherein the specification of the access rights to access the file for the other user stored in the data store of the cloud computer system comprises the following steps:
- reading the first cipher from the cloud computer system by the gateway computer system,
- decrypting the first cipher using the private key of the user that wants to grant the access rights to the other user, so as to obtain in this way the file-specific symmetric key with which the file was encrypted,
- encrypting the file-specific symmetric key using the public key of the other user by the gateway computer system, thus producing a second cipher,
- transferring the second cipher from the gateway computer system to the cloud computer system, so that the second cipher is associated with the encrypted file and the second cipher is stored in the data store of the cloud computer system.

8. The method according to any one of the preceding claims, wherein the secure connection is set up by an APN over a mobile communications connection, wherein the APN sets up the secure connection to the gateway computer system on account of the input of the URL of the cloud computer system.

9. A computer system with a gateway computer system (100) and a cloud computer system (102), wherein the cloud computer system is assigned a URL, wherein the gateway computer system is assigned an IP address, and wherein the gateway computer system is connected to the cloud computer system via a network (106), wherein the gateway computer system stores authentication data of registered users (114) for authentication with respect to the cloud computer system and at least one cryptographic key (120) for each registered user, wherein a DNS (172) is defined in an operating system of a terminal device of the user, wherein the gateway computer system and the cloud computer system are designed to carry out the following steps:
- transferring a request from the terminal device to the DNS defined in the operating system via the network in order to call up an IP address of the cloud computer system which is assigned to the URL of the cloud computer system,
- answering the request by the DNS by transferring the IP address of the gateway computer system to the terminal device,
- wherein an assignment of the URL of the cloud computer system to the IP address of the gateway computer system is stored in the DNS,
- setting up a protected connection between a first terminal device (112) of one of the users and the gateway computer system, wherein the protected connection is set up in accordance with the TCP/IP protocol with the IP address of the gateway computer system,
- transferring a file from the terminal device to the gateway computer system over the protected connection,
- setting up a session between the gateway computer system and the cloud computer system over the network,
- authenticating the user to the cloud computer system by the gateway computer system through the session in that the gateway computer system accesses the authentication data of the user stored in the gateway computer system for the authentication of the user.
- encrypting the file by the gateway computer system using the cryptographic key,
- transferring the encrypted file from the gateway computer system to the cloud computer system through the session,
- storing the encrypted file in the data store of the cloud computer system.

## Revendications

1. Procédé d'accès à une mémoire de données (128) d'un système informatique en nuage, cloud (102) par le biais d'un système informatique passerelle (100), où une adresse IP est associée au système informatique passerelle et où le système informatique passerelle est relié avec le système informatique en cloud par le biais d'un réseau (106), où une URL est associée au système informatique en cloud, où le système informatique passerelle stocke des données d'authentification (118) d'un utilisateur (114) pour l'authentification vis-à-vis du système informatique en cloud, ainsi qu'au moins une clé cryptographique (120), où, dans un système d'exploitation d'un appareil terminal de l'utilisateur, un système de nom de domaine DNS (172) est défini, avec les étapes suivantes :
- de transmission d'une demande de l'appareil terminal au système DNS défini dans le système d'exploitation, par le réseau, de consultation d'une adresse IP du système informatique en cloud, laquelle est associée à l'ULR du système informatique en cloud,
- de réponse du DNS à la requête par une transmission de l'adresse IP du système informatique passerelle à l'appareil terminal, où, un attribut de l'URL du système informatique en cloud est stocké avec l'adresse IP du système informatique passerelle dans le DNS,
- d'établissement d'une liaison protégée (110) entre un premier appareil terminal (112) de l'utilisateur et le système informatique passerelle, où l'établissement de la liaison protégée a lieu selon le protocole TCP/IP avec l'adresse IP du système informatique passerelle,
- de transmission d'une donnée (101) de l'appareil terminal au système informatique passerelle par le biais de la liaison protégée,
- d'établissement d'une session (154) entre le système informatique passerelle et le système informatique en cloud par le biais du réseau,
- d'authentification de l'utilisateur vis-à-vis du système informatique en cloud par le système informatique passerelle par le biais de la session, en ce que le système informatique passerelle accède aux données d'authentification de l'utilisateur stockées dans le système informatique passerelle pour l'authentification de l'utilisateur,
- de cryptage de la donnée à l'aide de la clé cryptographique par le système informatique passerelle,
- de transmission de la donnée cryptée (132) du système informatique passerelle au système informatique en cloud par le biais de la session,
- de stockage de la donnée cryptée dans la mémoire de données du système informatique en cloud.

2. Procédé selon la revendication 1, dans lequel le système informatique en cloud présente une liste de données (156) pour des données stockées dans le système informatique en cloud et une copie (158) de la liste de données est stockée dans le système informatique passerelle, avec les autres étapes suivantes :
- de création d'une page web pour la restauration de la copie de la liste de données par le système informatique passerelle,
- de transmission de la page web à l'appareil terminal par le biais de la liaison protégée,
- d'indication de la page web par l'appareil terminal et de saisie d'une sélection pour un chemin de donnée dans la copie de la liste de données indiquée pour le stockage de la donnée,
- de transmission de la sélection du chemin de donnée de l'appareil terminal au système informatique passerelle par le biais de la liaison protégée,
- de transmission d'une commande d'enregistrement du système informatique passerelle au système informatique en cloud pour l'enregistrement de la donnée cryptée dans la mémoire de données selon le chemin de donné choisi,
- de réception d'un signal de confirmation (162) du système informatique en cloud par le système informatique passerelle, où le signal de confirmation signale l'exécution réussie de l'ordre d'enregistrement,
- d'actualisation de la copie de la liste de données après la réception du signal de confirmation en raison du stockage de la donnée cryptée dans la mémoire de données du système informatique en cloud.

3. Procédé selon la revendication 1 ou 2, avec les autres étapes suivantes :
- de saisie d'un identifiant d'un autre utilisateur (146) dans l'appareil terminal par l'utilisateur,
- de transmission de l'identifiant par le biais de la liaison protégée de l'appareil terminal au système informatique passerelle,
- de spécification d'un doit d'accès pour l'accès à une donnée enregistrée dans la mémoire de données du système informatique en cloud pour l'autre utilisateur par l'utilisateur par le biais de la liaison protégée,
- de stockage de la spécification du droit d'accès et de l'identifiant associé de l'utilisateur par le système informatique passerelle,
- de création d'un message pour l'autre utilisateur par le système informatique passerelle,
- de transmission du message du système informatique passerelle à un appareil terminal de l'autre utilisateur à l'aide de l'identifiant,
- en raison de la réception d'une réponse suite au message par le système informatique passerelle :
a) l'établissement d'une liaison protégée entre le système informatique passerelle et l'appareil terminal de l'autre utilisateur,
b) l'établissement d'une session pour l'autre utilisateur entre le système informatique passerelle et le système informatique en cloud par le biais du réseau,
c) l'authentification de l'utilisateur vis-à-vis du système informatique en cloud par le système informatique passerelle par le biais de la session, en ce que le système informatique passerelle accède aux données d'authentification de l'utilisateur stockées dans le système informatique passerelle,
d) de transmission de la donnée cryptée du système informatique en cloud au système informatique passerelle par le biais de la session,
e) de décryptage de la donnée à l'aide de la clé cryptographique de l'utilisateur par le système informatique passerelle,
f) de transmission de la donnée décryptée du système informatique passerelle à l'appareil terminal de l'autre utilisateur par le biais de la liaison protégée établi dans l'étape a).

4. Procédé selon la revendication 3, dans lequel l'utilisateur indique un chemin de donnée vers l'appareil terminal pour la sélection de la donnée, cette sélection est transmise au système informatique passerelle par le biais de la liaison protégée, et la spécification du droit d'accès se rapporte à la donnée ainsi sélectionnée.

5. Procédé selon l'une des revendications précédentes, dans lequel, dans le cas de la liaison protégée, il s'agit d'un réseau privé virtuel, lequel est établi par le biais du réseau.

6. Procédé selon l'une des revendications précédentes, dans lequel la clé cryptographique (120) est cryptée avec la donnée qui est associée à l'utilisateur.

7. Procédé selon l'une des revendications précédentes 3, 4 ou 5, dans lequel la clé cryptographique (120) avec laquelle la donnée est cryptée est une clé symétrique spécifique à la donnée, où une paire de clés cryptographiques asymétrique avec une clé publique et une clé privée est respectivement associée à l'utilisateur (114) et à l'autre utilisateur (146), et la clé symétrique spécifique à la donnée est cryptée par le système informatique passerelle à l'aide de la clé publique de l'utilisateur afin de transmettre le premier chiffrement en résultant au système informatique en cloud par le biais de la première session, de sorte que le premier chiffrement est associé à la donnée cryptée et le premier chiffrement est stocké dans la mémoire de donnée du système informatique en cloud, où la clé symétrique spécifique à la donnée est effacée après le cryptage de la donnée par le système informatique passerelle, où la spécification du droit d'accès à la donnée stockée dans le système informatique en cloud pour l'autre utilisateur contient les étapes suivantes :
- la lecture du premier chiffrement par le système informatique passerelle à partir du système informatique en cloud,
- le décryptage du premier chiffrement à l'aide de la clé privée de l'utilisateur qui voudrait accorder le droit d'accès à l'autre utilisateur afin d'obtenir ainsi la clé symétrique spécifique à la donnée avec laquelle la donnée a été cryptée,
- le cryptage de la clé symétrique spécifique à la donnée à l'aide de la clé publique de l'autre utilisateur par le système informatique passerelle, à partir duquel il résulte un deuxième chiffrement,
- la transmission du deuxième chiffrement du système informatique passerelle au système informatique en cloud de sorte que le deuxième chiffrement est associé à la donnée cryptée, et le deuxième chiffrement est stocké dans la mémoire de données du système informatique en cloud.

8. Procédé selon l'une des revendications précédentes, dans lequel la liaison protégée est établie par un nom de point d'accès APN par le biais d'une liaison radio mobile, où l'APN établit la liaison protégée en raison de la saisie de l'URL du système informatique en cloud avec le système informatique passerelle.

9. Système informatique avec un système informatique passerelle (100) et un système informatique en cloud (102), où une URL est associée au système informatique en cloud, où une adresse IP est associée au système informatique passerelle et où le système informatique passerelle est relié avec le système informatique en cloud par le biais d'un réseau (106), où le système informatique passerelle stocke des données d'authentification d'un utilisateur (114) enregistré pour l'authentification vis-à-vis du système informatique en cloud ainsi qu'au moins une clé cryptographique (120) pour chacun des utilisateurs enregistrés, où, dans un système d'exploitation d'un appareil terminal de l'utilisateur, un système de nom de domaine DNS (172) est défini, où le système informatique passerelle et le système informatique en cloud sont conçus pour l'exécution des étapes suivantes :
- de transmission d'une demande de l'appareil terminal au système DNS défini dans le système d'exploitation, par le réseau, de consultation d'une adresse IP du système informatique en cloud, laquelle est associée à l'ULR du système informatique en cloud,
- de réponse du DNS à la requête par une transmission de l'adresse IP du système informatique passerelle à l'appareil terminal,
- où un attribut de l'URL du système informatique en cloud est stocké avec l'adresse IP du système informatique passerelle,
- d'établissement d'une liaison protégée entre un premier appareil terminal (112) par l'un des utilisateurs et du système informatique passerelle, où l'établissement de la liaison protégée a lieu selon le protocole TCP/IP avec l'adresse IP du système informatique passerelle,
- de transmission d'une donnée de l'appareil terminal au système informatique passerelle par le biais de la liaison protégée,
- d'établissement d'une session (154) entre le système informatique passerelle et le système informatique en cloud par le biais du réseau,
- d'authentification de l'utilisateur vis-à-vis du système informatique en cloud par le système informatique passerelle par le biais de la session, en ce que le système informatique passerelle accède aux données d'authentification de l'utilisateur stockées dans le système informatique passerelle pour l'authentification de l'utilisateur,
- de cryptage de la donnée à l'aide d'une clé cryptographique par le système informatique passerelle,
- de transmission de la donnée cryptée du système informatique passerelle au système informatique en cloud par le biais de la session,
- de stockage de la donnée cryptée dans la mémoire de données du système informatique en cloud.
